# EUROPEAN PATENT APPLICATION

(11) **EP 4 823 172 A1**
(43) Date of publication of application: **14.10.2026**
(21) Application number: 23960466.3
(22) Date of filing: 05.12.2023
(51) Int. Cl.: H04W 36/00

(54) **METHODS FOR CELL HANDOVER, TERMINAL DEVICES, AND NETWORK DEVICES**

(71) Applicant: GUANGDONG OPPO MOBILE TELECOMMUNICATIONS CORP., LTD., Dongguan, Guangdong 523860 (CN)
(72) Inventor: WU, Hao, Dongguan, Guangdong 523860 (CN)
(74) Representative: Grassi, Stefano
(86) International application number: PCT/CN2023/136544
(87) International publication number: WO 2025/118152

(57) **Abstract**

The present application provides methods for cell handover, terminal devices, and network devices. A method for cell handover comprises: a terminal device receiving first configuration information sent by a first network device, the first configuration information comprising configuration information corresponding to a plurality of candidate cells, wherein the plurality of candidate cells are determined on the basis of a predicted trajectory of the terminal device, and the plurality of candidate cells are used for the terminal device to perform continuous handover.

## Description

### TECHNICAL FIELD

The present disclosure relates to the field of communication technology, and particularly to a method for cell handover, a terminal device and a network device.

### BACKGROUND

In the current conditional handover mechanism, the terminal device may receive configuration information of the candidate cell sent by the network device before performing cell handover, and the terminal device may handover to the candidate cell when the candidate cell meets the handover condition. However, the conditional handover mechanism has the problems of long handover time and large amount of signaling transmitted by air interface.

### SUMMARY

The present disclosure provides a method for cell handover, a terminal device and a network device. Several aspects of the present disclosure are described below.

A first aspect provides a method for cell handover, which includes an operation that a terminal device receives first configuration information sent by a first network device. The first configuration information includes configuration information corresponding to a plurality of candidate cells, the plurality of candidate cells are determined based on a predicted trajectory of the terminal device, and the plurality of candidate cells is used by the terminal device for successive handover.

A second aspect provides a method for cell handover, which includes an operation that a first network device sends first configuration information to a terminal device. The first configuration information includes configuration information corresponding to a plurality of candidate cells, the plurality of candidate cells are determined based on a predicted trajectory of the terminal device, and the plurality of candidate cells is used by the terminal device for successive handover.

A third aspect provides a terminal device, which includes: a receiving unit configured to receive first configuration information transmitted by a first network device. The first configuration information includes configuration information corresponding to a plurality of candidate cells, the plurality of candidate cells are determined based on a predicted trajectory of the terminal device, and the plurality of candidate cells is used by the terminal device for successive handover.

A fourth aspect provides a network device, which is a first network device, and includes: a sending unit configured to send first configuration information to a terminal device. The first configuration information includes configuration information corresponding to a plurality of candidate cells, the plurality of candidate cells are determined based on a predicted trajectory of the terminal device, and the plurality of candidate cells is used by the terminal device for successive handover.

A fifth aspect provides a terminal device including a processor, a memory, and a communication interface. The memory is used for storing one or more computer programs, and the processor is used for invoking the computer programs in the memory to cause the terminal device to execute some or all of the steps in the method in the first aspect.

A sixth aspect provides a network device including a processor, a memory, and a communication interface. The memory is used to store one or more computer programs, and the processor is used to invoke the computer programs in the memory to cause the network device to perform some or all of the steps in the method in the second aspect.

A seventh aspect of the embodiments of the present disclosure provides a communication system including the above-described terminal and/or network device. In another possible design, the system may further include other devices that interact with the terminal or the network device in the solution provided by the embodiment of the present disclosure.

An eighth aspect of the embodiments of the present disclosure provides a computer-readable storage medium having a computer program stored thereon that causes a terminal device to perform some or all of the steps of the method in the first aspect.

A ninth aspect of the embodiments of the present disclosure provides a computer-readable storage medium having a computer program stored thereon that causes a network device to perform some or all of the steps in the method in the second aspect.

A tenth aspect of the embodiments of the present disclosure provides a computer program product which includes a non-transitory computer-readable storage medium having a computer program stored thereon. The computer program is operable to cause a terminal to perform some or all of the steps in the method in the first aspect. In some implementations, the computer program product may be a software installation package.

An eleventh aspect of the embodiments of the present disclosure provides a computer program product which includes a non-transitory computer-readable storage medium having a computer program stored thereon. The computer program is operable to cause a network device to perform some or all of the steps in the method in the second aspect described above. In some implementations, the computer program product may be a software installation package.

A twelfth aspect of the embodiments of the present disclosure provides a chip including a memory and a processor, and the processor can call and run a computer program from the memory to implement some or all of the steps described in the method in the first aspect or the second aspect described above.

In the technical solution provided by the embodiments of the present disclosure, the network device can determine a plurality of candidate cells (for example, the plurality of candidate cells can include a plurality of cells on the predicted trajectory path of the terminal device) based on the predicted trajectory of the terminal device, and send configuration information of the plurality of candidate cells to the terminal device. Therefore, the terminal device can perform successive handover on the predicted trajectory path, to implement multi-hop handover of the terminal device. In this way, the network device can avoid from retransmitting configuration information of the candidate cells to the terminal device after each handover of the terminal device is completed. Therefore, the solution of the embodiments of the present disclosure can reduce the amount of data transmitted by the air interface and shorten the handover time.

### BRIEF DESCRIPTION OF THE DRAWINGS

FIG. 1 shows a wireless communication system 100 to which an embodiment of the present disclosure is applied.
FIG. 2 is a flowchart of a conventional conditional handover.
FIG. 3 is a flowchart of an LTM-based handover.
FIG. 4 is a schematic flowchart of a method for cell handover according to an embodiment of the present disclosure.
FIG. 5 is a schematic diagram of a candidate cell provided by an embodiment of the present disclosure.
FIG. 6 is a schematic block diagram of a terminal device provided by an embodiment of the present disclosure.
FIG. 7 is a schematic block diagram of a network device provided by an embodiment of the present disclosure.
FIG. 8 is a schematic structural diagram of a communication device according to an embodiment of the present disclosure.

### DETAILED DESCRIPTION

Hereinafter, technical solutions in the present disclosure will be described with reference to the accompanying drawings.

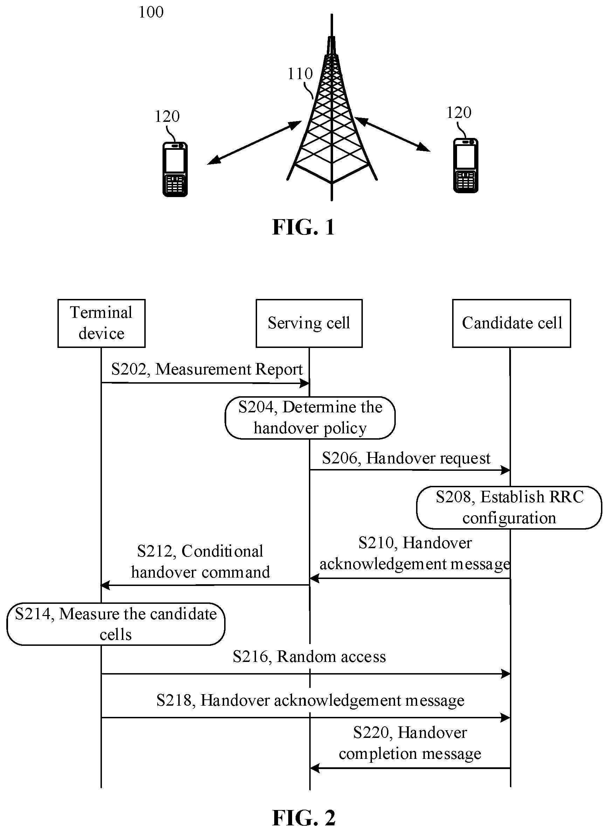

FIG. 1 is a wireless communication system 100 to which an embodiment of the present disclosure is applied. The wireless communication system 100 may include a network device 110 and a terminal device 120. The network device 110 may be a device that communicates with the terminal device 120. The network device 110 may provide communication coverage for a particular geographical area and may communicate with the terminal device 120 located within the coverage area.

FIG. 1 illustrates one network device and two terminal devices as an example. Optionally, the wireless communication system 100 may include a plurality of network devices and another number of terminal devices may be included in the coverage area of each network device, which is not limited in the embodiment of the present disclosure.

Optionally, the wireless communication system 100 may further include other network entities such as a network controller and a mobile management entity, which is not limited in the embodiment of the present disclosure.

It should be understood that the technical solution of the embodiments of the present disclosure can be applied to various communication systems, such as a fifth generation (5G) system or a new radio (NR) system, a long-term evolution (LTE) system, an LTE frequency division duplex (FDD) system, an LTE time division duplex (TDD) system, and the like. The technical solution provided by the present disclosure can also be applied to future communication systems, such as sixth generation mobile communication systems, satellite communication systems, and the like.

The terminal device in the embodiment of the present disclosure may also be referred to as a user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent, or a user device. The terminal device in the embodiment of the present disclosure may be a device that provides voice and/or data connectivity to a user, and may be used to connect people, objects, and machines, such as a handheld device having a wireless connection function, a vehicle-mounted device, or the like. The terminal device in the embodiment of the present disclosure may be a mobile phone, a tablet computer, a notebook computer, a handheld computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, or the like. Alternatively, the UE may be used to act as a base station. For example, a UE may act as a scheduling entity that provides sidelink signals between UEs in V2X or D2D, etc. For example, cellular telephones and cars communicate with each other using sidelink signals. The cellular telephones and smart home devices communicate with each other without relaying communication signals through a base station.

The network device in the embodiment of the present disclosure may be a device for communicating with a terminal device, and the network device may also be referred to as an access network device or a wireless access network device, for example, the network device may be a base station. The network device in the embodiment of the present disclosure may refer to a radio access network (RAN) node (or device) that connects a terminal device to a wireless network. The base station may broadly cover, or be replaced with, various names such as Node B (NodeB), an evolved NodeB (eNB), a next generation NodeB (gNB), a Relay Station, a transmitting and receiving point (TRP), a transmitting point (TP), a Primary Station MeNB, a Secondary Station SeNB, a Multi-Standard Radio (MSR) node, a Home base Station, a Network Controller, an access Node, a Radio Node, an access point (AP), a Transmission Node, a Transceiver Node, a base band Unit (BBU), a Remote Radio Unit (RRU), an active antenna Unit (AAU), a Remote Radio head (RRH), a central Unit (CU), a distributed Unit (DU), a Positioning Node, and the like. The base station may be a macro base station, a micro base station, a relay node, a donor node, or the like, or a combination thereof. A base station may also refer to a communication module, a modem, or a chip disposed within the aforementioned device or apparatus. The base station may also be a mobile switch center and a device that undertakes a base station function in the device-to-device D2D, vehicle-to-everything (V2X), machine-to-machine (M2M) communication, a network-side device in a 6G network, a device that undertakes a base station function in a future communication system, or the like. The base stations may support networks of the same or different access technologies. The embodiment of the present disclosure does not limit the specific technology and the specific device form adopted by the network device.

The base station may be stationary or mobile. For example, a helicopter or a drone may be configured as a mobile base station, and one or more cells may vary according to the location of the mobile base station. In other examples, the helicopter or drone may be configured to be used as a device to communicate with another base station.

In some deployments, the network device in the embodiment of the present disclosure may refer to a CU or a DU, or the network device may include the CU and DU. The gNB may also include an AAU.

The network device and the terminal device may be deployed on land, including indoor or outdoor, handheld or vehicle-mounted; or may also be deployed on the water surface; or may also be deployed on aircraft, balloons or satellites in the air. The scenario in which the network device and the terminal device are located is not limited in the embodiment of the present disclosures.

It should be understood that all or part of the functionality of the communication device in the present disclosure may also be implemented by software functionality running on hardware, or by instantiated virtualization functionality on a platform, such as a cloud platform.

### Cell handover

The cell handover (HO) aims to improve the continuity of the service provided by the communication system to the terminal device. In a wireless communication system, when the terminal device moves from one cell (referred as a "source cell") to another cell, the terminal device needs to handover to another cell (also known as a "target cell") in order to maintain communication. The cell may be a primary cell (PCell) or a primary secondary cell (PSCell). Generally, cell handover can be classified into traditional handover mechanism and conditional handover mechanism.

In the conventional handover mechanism, in order to improve the continuity of the service provided by the communication system to the terminal device in the connected state, the network device sends a handover command to the terminal device at an appropriate time (e.g., a signal measurement result of the terminal device in the serving cell is below a threshold value) to instruct the terminal device to perform cell handover. In some implementations, the above-described handover command may be an RRC reconfiguration message containing synchronization reconfiguration information.

In the conditional handover (CHO) mechanism, the network device may configure, for the terminal device, the configuration of one or more candidate cells and conditional handover events associated with the one or more candidate cells. The conditional handover event may also be referred to as a conditional handover trigger condition. Accordingly, the terminal device may determine whether the conditional handover event is satisfied based on the signal measurement result of the candidate cell. If the terminal device determines that a candidate cell satisfies the conditional handover event, the terminal device may initiate random access to the candidate cell.

The conditional handover procedure is introduced below with reference to FIG. 2.

In step S202, the terminal device sends a measurement report to the serving cell.

In step S204, the serving cell determines a handover policy based on the measurement report. If the serving cell determines that the terminal device needs to perform cell handover, the serving cell may send a handover request to the candidate cell.

In step S206, the serving cell sends a handover request to the candidate cell.

In step S208, if the candidate cell accepts the handover request, the candidate cell may establish the RRC configuration.

In step S210, the candidate cell sends a handover acknowledgement message to the serving cell. The handover acknowledgement message may include the RRC configuration of the candidate cell.

In step S212, after receiving the handover acknowledgement message, the serving cell may send a conditional handover command to the terminal device.

In step S214, the terminal device measures the candidate cell, and if the candidate cell satisfies the handover condition, the terminal device may trigger the conditional handover.

In step S216, the terminal device initiates random access to the candidate cell to synchronize with the candidate cell.

In step S218, the terminal device transmits a handover acknowledgement message to the candidate cell.

In step S220, the candidate cell transmits a handover completion message to the serving cell.

In some implementations, the conditional handover command includes configuration information associated with at least one candidate cell. The configuration information associated with any one of the at least one candidate cell may include one or more of configuration parameter 1, configuration parameter 2, and configuration parameter 3.

The configuration parameter 1 includes a logical identification ID, and a logical number for identifying a CHO configuration, a conditional PSCell addition (CPA) configuration, or a conditional PSCell change (CPC) configuration. In some implementations, the configuration parameter 1 described above may include the parameter CondReconfigId.

The configuration parameter 2 includes configuration information of the candidate cell, and the terminal device can handover to the candidate cell based on the configuration information of the candidate cell. In some implementations, the configuration parameter 2 may include one or more of the following configuration information: a physical layer configuration which is to be used by the terminal device in the candidate cell, a media access control (MAC) layer configuration which is to be used by the terminal device in the candidate cell, a radio link control (RLC) layer configuration which is to be used by the terminal device in the candidate cell, a data radio bearer (DRB) related configuration which is to be used by the terminal device in the candidate cell, a frequency band and bandwidth related configuration supported by the candidate cell, and a random access configuration.

The configuration parameter 3 is handover condition configuration. In some implementations, the configuration parameter 3 may include at least one measurement ID associated with a measurement object (MO) configuration and a measurement report configuration. In some implementations, the measurement report configuration may include a conditional handover event, and the conditional handover event is used for the terminal device to determine whether to trigger handover to a candidate cell associated with the conditional handover event, and thus the conditional handover event may also be referred to as a "conditional handover trigger condition" or a "conditional handover-related handover condition".

In some implementations, the conditional handover event may include at least one of a conditional event A3, a conditional event A4, a conditional event A5, a conditional event D1, and a conditional event T1.

The conditional event A3 includes the measurement result of the candidate cell being higher than the measurement result of the current serving cell in which the terminal device is located, and the difference between the measurement result of the candidate cell and the measurement result of the current serving cell being greater than or equal to a first threshold.

The conditional event A4 includes the measurement result of the candidate cell being greater than or equal to a second threshold.

The conditional event A5 includes the measurement result of the current serving cell in which the terminal device is located being less than a third threshold and the measurement result of the candidate cell being higher than a fourth threshold.

The conditional event D1 includes a distance between the terminal device and the position reference point 1 being greater than a fifth threshold and a distance between the terminal device and the position reference point 2 being less than a sixth threshold.

The conditional event T1 includes the local time of the terminal device exceeding the configured time 1 but not exceeding the configured time 2. The configured time 2 is later than the configured time 1.

In some embodiments, the conditional event A3 and the conditional event A5 may be applicable to all types of conditional handover. The conditional event A4, the conditional event D1, and the conditional event T1 may be applicable to the NTN and CPC scenarios. In an NTN scenario, a conditional handover may configure one or two conditional handover events. In some embodiments, the conditional event D1 and the conditional event T1 are configured along with at least one of the other events, such as the conditional event A3, the conditional event A4, and the conditional event A5. If two conditional handover events are provided, the candidate cell may trigger the random access procedure of the terminal device only when the two conditional handover events are satisfied simultaneously.

In some embodiments, if the network device configures a plurality of candidate cells for the terminal device, and when the terminal device attempts to access one of the candidate cells and fails in the random access due to channel deterioration, load balancing or the like, the terminal device may re-select a candidate cell and attempt to access. If the terminal device fails in random access again, the conditional handover process fails, and the terminal device needs to perform a connection re-establishment process.

### Layer 1/Layer 2-Triggered mobility (LTM) procedure

The current conditional handover mechanism is triggered by L3 measurements and accomplished by RRC signaling. The L3-based handover requires reconfiguration of the RRC layer or the PDCP layer, and requires resetting of the MAC layer and/or the physical layer, which increases the complexity of the handover flow and increases the handover delay. In view of this, the LTM mechanism is introduced. Through L1/L2 signaling, the LTM changes the service cell of terminal device while maintaining the high-level configuration unchanged, which is beneficial to reduce delay, overhead and interrupt time.

During the LTM execution phase, the terminal device may periodically report the L1 measurement result. The network device may make an LTM decision based on the measurement result and send a handover command to the terminal device. The terminal device may leave the current serving cell and attempt to access the target LTM cell. In the LTM decision, the terminal device will retain the configuration information of the LTM candidate cell after the handover, so as to facilitate the subsequent handover.

In some embodiments, the network device may send the handover command to the terminal device in the form of a MAC CE. Alternatively, the handover command may be carried in the MAC CE.

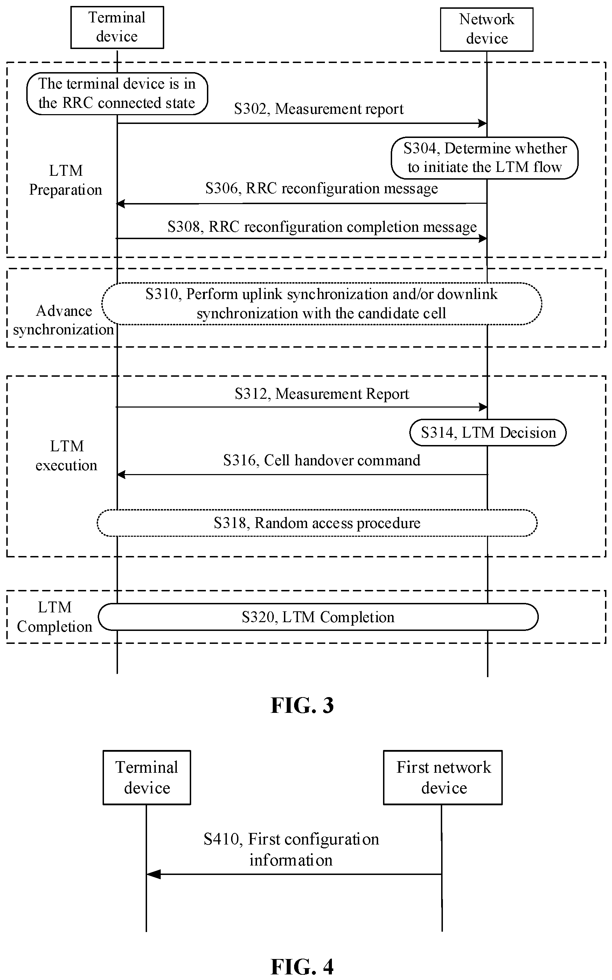

The LTM procedure is described in detail in conjunction with Figure 3. The LTM procedure can be roughly divided into four stages, namely, the LTM preparation stage (e.g., step S302 to step S308), the advance synchronization stage (e.g., step S310), the LTM execution stage (e.g., step S312 to step S318), and the LTM completion stage (e.g., step S320). The above steps are described below.

Referring to FIG. 3, in step S302, the terminal device may transmit a measurement report to the network device. The terminal device according to the embodiment of the present disclosure may be a terminal device in an RRC connected state.

In some embodiments, the measurement report may be based on an L3 measurement.

In step S304, the network device may determine whether to initiate an LTM flow based on the measurement report. If the network device determines to initiate the LTM flow, the network device may trigger the candidate cell to perform handover preparation.

In step S306, the network device transmits an RRC reconfiguration message (i.e., an RRC reconfiguration message) to the terminal device. The RRC reconfiguration message may include configuration information of the candidate cell. The number of candidate cells may be one or more. After receiving the RRC reconfiguration message, the terminal device may store the configuration information of the candidate cell in the RRC reconfiguration message.

In step S308, the terminal device transmits an RRC reconfiguration complete message (that is, an RRC reconfiguration complete message) to the network device.

In step S310, the terminal device and the candidate cell perform uplink synchronization and/or downlink synchronization. The terminal device may perform uplink synchronization and/or downlink synchronization with the candidate cell in advance to reduce the interrupt delay of the handover procedure.

In step S312, the terminal device transmits a measurement report to the network device. The measurement report may be obtained by L1 measurement. The measurement report may include measurement results for one or more candidate cells.

In step S314, the network device makes an LTM decision. If the network device determines that the terminal device can perform cell handover, step S316 is executed. In some embodiments, the network device may determine a target cell based on a measurement result reported by the terminal device, and instruct the terminal device to handover to the target cell. In some embodiments, the network device may instruct the terminal device to handover to the target cell through the MAC CE.

In step S316, the network device transmits a cell switch command to the terminal device. The cell switch command may be carried in the MAC CE.

In step S318, the terminal device leaves the serving cell and initiates a random access procedure to the target cell. In some embodiments, the terminal device may initiate a random access procedure to the target cell using the configuration information of the target cell. If the terminal device does not have a valid timing advance (TA) of the target cell, the terminal device may initiate random access to the target cell after receiving the cell switch command sent by the network device.

In step S320, the terminal device and the network device complete the LTM handover procedure.

Currently, the candidate cells included in the handover command are all neighboring cells around the current serving cell. In other words, the serving cell included in the handover command only includes a cell to which the terminal device moves only one hop, and the terminal device can enter the neighboring cell after leaving the current serving cell, but cannot directly handover from the neighboring cell to another cell. Each time the terminal device completes the handover procedure, the network device should send the handover command (or conditional handover command) again to configure, for the terminal device, the cell to which the terminal device can access the next time. This method is not beneficial to reduce the amount of data transmitted by the air interface and shorten the handover time.

Based on this, an embodiment of the present disclosure provides a method for cell handover, a terminal device and a network device. The network device can determine a plurality of candidate cells based on the predicted trajectory of the terminal device and send configuration information of the plurality of candidate cells to the terminal device. Since the plurality of candidate cells include a plurality of cells on the predicted trajectory path of the terminal device, the terminal device can perform continuous handover on the predicted trajectory path, that is, to implement multi-hop handover of the terminal device, thereby reducing the amount of data transmitted by the air interface and shortening the handover time.

Hereinafter, a method for cell handover provided by an embodiment of the present disclosure is described in detail with reference to FIG. 4.

Referring to FIG. 4, in step S410, the first network device sends first configuration information to the terminal device. The first network device may be a network device corresponding to a serving cell (or a current serving cell) of the terminal device.

In some embodiments, the first configuration information may also be referred to as conditional handover information.

In some embodiments, the first configuration information may be carried in a handover command. For example, the first network device may transmit a handover command including the first configuration information to the terminal device. In other embodiments, the first configuration information may also be carried in other messages. For example, the first configuration information may be carried in a dedicated message.

In some embodiments, the handover command in the embodiment of the present disclosure may also be referred to as a conditional handover command or a continuous conditional handover command.

In some embodiments, the handover command may be carried in the MAC CE.

In some embodiments, the configuration information of the plurality of candidate cells may include reserved resources corresponding to the plurality of candidate cells, and the reserved resources may be used for subsequent random access by the terminal device.

In some embodiments, the first configuration information may include configuration information corresponding to a plurality of candidate cells. The configuration information corresponding to the plurality of candidate cells can be used for the terminal device to perform continuous handover, or the configuration information corresponding to the plurality of candidate cells can be used for the terminal device to perform multi-hop handover. The terminal device may perform multi-hop handover based on the first configuration information. For example, the terminal device may, based on the first configuration information, handover from cell 1 among the plurality of candidate cells to cell 2 among the plurality of candidate cells, and then handover from cell 2 among the plurality of candidate cells to other cells among the plurality of candidate cells. The handover from cell 1 to cell 2 of the terminal device can be understood as one-hop handover or one-time handover of the terminal device. In the solution of the embodiment of the present disclosure, the configuration information required for the terminal device to perform multi-hop handover (or multiple handover) can be sent to the terminal device by the first network device through the same piece of information (that is, the first configuration information).

In some embodiments, the cell handover performed by the terminal device may be a L3-based conditional handover, or may be an LTM handover, or may be a conditional LTM (conditional LTM) handover.

In some embodiments, the plurality of candidate cells may be determined based on the predicted trajectory of the terminal device. For example, the plurality of candidate cells may be determined based on the predicted trajectory path of the terminal device. The plurality of candidate cells may be cells on the predicted trajectory path of the terminal device. In some embodiments, the plurality of candidate cells may be a part or all of cells on the predicted trajectory path. The method of determining the plurality of candidate cells will be described in detail below.

In some embodiments, the predicted trajectory of the terminal device may be predicted by the first network device. There are many ways for predicting the trajectory of the terminal device by the first network device, which will be explained below.

In the embodiment of the present disclosure, the trajectory of the terminal device is predicted, and a plurality of candidate cells are determined based on the predicted trajectory of the terminal device. Thus, the terminal device can perform continuous handover in the process of moving, so as to realize multi-hop handover. Based on the solution provided by the embodiment of the present disclosure, the first network device can send configuration information of a plurality of candidate cells to the terminal device, which can avoid from sending configuration information of the candidate cells to the terminal device after each handover of the terminal device is completed, thereby reducing the signaling amount of air interface transmission and shortening the handover time.

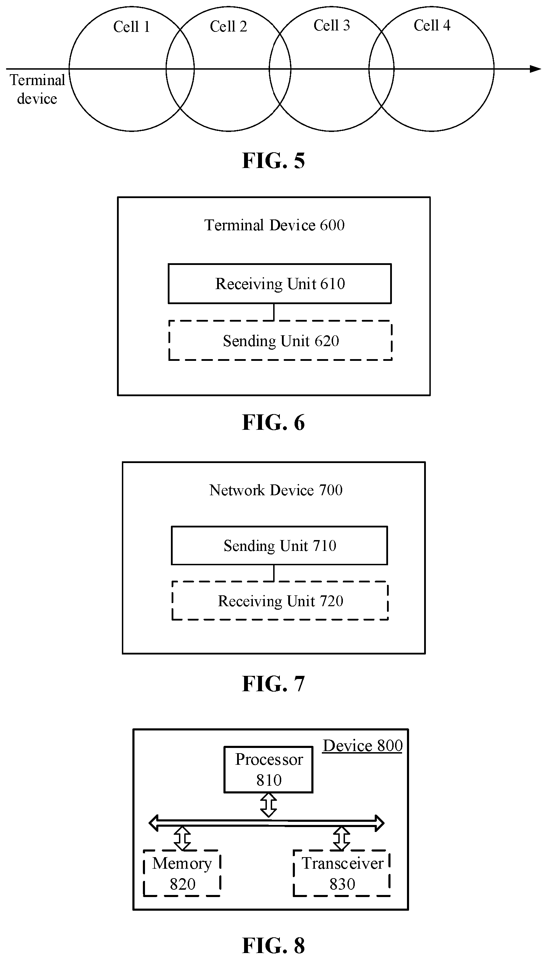

Taking FIG. 5 as an example, the traditional conditional handover mechanism can only configure a candidate cell for one hop, that is, only cell 1 can be configured as a candidate cell. If the first network device configures cells 1 to 4, the network device should send the conditional handover command four times. However, in the embodiment of the present disclosure, multi-hop candidate cells can be configured by one conditional handover command, that is, cell 1, cell 2, cell 3, and cell 4 can be configured as candidate cells, so that the terminal device can realize continuous handover among cell 1 to cell 4.

In some embodiments, the first configuration information may further include the configuration parameter 1 and/or the configuration parameter 3 described above. For example, the first configuration information may include a logical identification ID. For another example, the first configuration information may include a handover condition configuration, such as a conditional handover event.

In some embodiments, the first configuration information may be configured based on the levels of the plurality of candidate cells. In other words, the first network device may hierarchically configure the configuration information of a plurality of candidate cells, to reduce the handover complexity of terminal device. In some embodiments, the configuration information of the candidate cells in the same level may be configured together. In some embodiments, the level of the candidate cell may be determined according to the number of handovers to the candidate cell. Here, the number of handovers in continuous handover to candidate cells in different levels is different, or the number of handovers in continuous handover to candidate cells in the same level is the same.

In some embodiments, the terminal device may perform cell handover based on the level of the candidate cell. When the terminal device performs cell handover, the terminal device can select a cell from the corresponding level without selecting from all candidate cells, thereby reducing the complexity of handover.

In some embodiments, the first network device may classify a plurality of candidate cells by their levels. In some possible implementations, the first network device may classify the levels of the candidate cells based on the coverage area of the candidate cells and the predicted trajectory of the terminal device. For example, on the predicted trajectory of the terminal device, the level of the cell raises and the number of handover performed by the terminal device increases, as the cell gets away from the terminal device. Taking FIG. 5 as an example, cell 1 is a first-level cell, cell 2 is a second-level cell, cell 3 is a third-level cell, and cell 4 is a fourth-level cell. The terminal device may handover from cell 1 to cell 2, from cell 2 to cell 3, and from cell 3 to cell 4.

In some embodiments, the configuration information of all the candidate cells included in the first configuration information is hierarchically configured, or the configuration information of a part of the candidate cells included in the first configuration information is hierarchically configured, and the configuration information of the other part of the candidate cells is not hierarchically configured.

In some embodiments, the plurality of candidate cells include first-level cells and second-level cells which are of adjacent levels. The terminal device may be handed over from the first-level cell to the second-level cell. The first cell of the first-level cells and the second cell of the second-level cells have an association relationship. The association relationship may indicate that the terminal device can handover to the second cell at the next handover after the terminal device hands over to the first cell. In other words, there is an up-down succession relationship between the first-level cell and the second-level cell. The association relationship in the embodiment of the present disclosure may be a succession relationship.

For example, assuming that the first-level cell includes cell 1 and cell 2, and the second-level cell includes cell 3, cell 4, and cell 5, if cell 1 and cell 3 have an association relationship, the terminal device may be able to handover to cell 3 at the next handover after the handover to cell 1. If cell 1 and cell 4 do not have an association relationship, the terminal device cannot handover to cell 4 at the next handover after the handover to cell 1.

In some embodiments, the first network device may transmit indication information to the terminal device, which may indicate the above-described association relationship between the first cell and the second cell. The first network device may indicate, to the terminal device, which cells of the first-level cells may be handed over to which cells of the second-level cells. By indicating the association relationship between the cells to the terminal device, the terminal device may specify the cells that can be used for handover, thereby avoiding the blindness of the cell handover procedure, and reducing the delay of cell handover.

In some embodiments, whether there is an association relationship between the cells may be determined according to the predicted trajectory of the terminal device. For example, the cells on the same predicted trajectory may have an association relationship, and cells which are not on the same predicted trajectory may not have an association relationship.

For example, assuming that the first network device predicts that the terminal device may have two trajectory paths in the future (for example, in the next 1 minute), the cell IDs of cells through which the first path passes are 1-2-3, and the cell IDs of cells through which the second path passes are 1-5-6, the first network device may determine the level of the cell based on the predicted trajectory path. For example, the first network device may set cell 1 as a first-level cell, cell 2 as a 1.1-level cell, cell 5 as a 1.2-level cell, cell 3 as a 1.1.1-level cell, and cell 6 as a 1.1.2-level cell. The association relationship in the embodiment of the present disclosure may be referred to as a conditional handover chain (such as 1-2-3 or 1-5-6). The cell 1, cell 2 and cell 3 have an association relationship, the cell 1, cell 5 and cell 6 have an association relationship, the cell 2 and cell 6 do not have an association relationship, and the cell 5 and cell 3 do not have an association relationship.

After the first conditional handover of the terminal device is to handover to the cell 1, the second conditional handover may be to handover to any one of cell 2 and cell 5. However, if the terminal device hands over to cell 2, since cell 2 has an association relationship with cell 3, but has no association relationship the cell 6, the third conditional handover of the terminal device can be handover to only cell 3 rather than cell 6 although cell 3 and cell 6 are in the same level.

In some embodiments, different levels of cells may have no association relationship. In this case, in a next handover after the terminal device hands over to any one of the cells in a certain level, the terminal device may be able to handover to any one of the cells in the next level. As an example, assuming that the plurality of candidate cells include a third-level cell and a fourth-level cell which are in adjacent levels, the terminal device can handover to any one of the fourth-level cell at the next handover after handover to any one of the third-level cell.

For example, assuming that the third-level cell includes cell 1 and cell 2, and the fourth-level cell includes cell 3, cell 4 and cell 5, if the third-level cell and the fourth-level cell do not have an association relationship, the second conditional handover may select from cell 3, cell 4 and cell 5 no matter whether the first conditional handover of the terminal device is to cell 1 or cell 2.

### Release of resources

In some embodiments, if the terminal device successfully hands over to one of the plurality of candidate cells based on the first configuration information, the first network device may release reserved resources corresponding to the cell to reduce resources occupied by cell handover and avoid waste of resources. The release of the reserved resources may be actively performed by the first network device, or may be requested to the first network device by the terminal device. For example, the terminal device may transmit first information to the first network device, and the first information is used to apply for releasing the reserved resources corresponding to the candidate target cell. The candidate target cell is associated with the cell after the handover. Alternatively, the candidate target cell may be understood as a cell to which the terminal device does not subsequently handover.

In some embodiments, the reserved resources may include resources required during the random access procedure. For example, the reserved resources may include one or more of a beam, a frequency point, a synchronization signal block, and the like.

In some embodiments, the candidate target cell may belong to the plurality of candidate cells. For example, the candidate target cell may be one or more of the plurality of candidate cells. Alternatively, the candidate target cell may be a part or all of the plurality of candidate cells.

In some embodiments, the candidate target cell may be indicated by an ID of the candidate target cell. For example, the first information may include an ID of the candidate target cell and/or an ID list of the candidate target cell.

In some embodiments, the terminal device may send the first information to the first network device each time the cell handover is completed to apply for releasing the reserved resources corresponding to the candidate target cell, to release the reserved resources as soon as possible. In other embodiments, the terminal device may send the first information to the first network device after a plurality of cell handovers are completed, to apply for releasing the reserved resources corresponding to the candidate target cell, thereby reducing the amount of data transmitted by the air interface.

The manner of determining the candidate target cell is not limited in the embodiments of the present disclosure. In some embodiments, the candidate target cell may be determined based on the level of the candidate cell. In other embodiments, the candidate target cell may be determined based on an association between the cells.

In some embodiments, the candidate target cell includes one or more of a first target cell and a second target cell. The first target cell may be a cell at the same level as the cell after handover. In other words, the terminal device may apply for releasing the reserved resources corresponding to other cells at the same level after the cell handover is completed. Since the terminal device will not handover to other cells at the same level as the target cell after handover to the target cell, the terminal device can apply for releasing reserved resources corresponding to other cells to release this part of resources.

The second target cell may have an association relationship with the first target cell, and the association relationship indicates that the terminal device can handover to the second target cell at a next handover after handover to the first target cell. Alternatively, the second target cell and the first target cell may have the above-described succession relationship, and the terminal device may handover from the first target cell to the second target cell. Therefore, the second target cell does not have a succession relationship with the cell after handover. After the cell handover is completed, the terminal device may apply for releasing reserved resources of other cells that have no succession relationship with the cell after handover. Since after the terminal device hands over to the target cell, the terminal device will only handover to the cell associated with the target cell and will not handover to the cell not associated with the target cell, the terminal device may apply for releasing the reserved resources corresponding to these unassociated cells, to release this part of the resources.

In some embodiments, the candidate target cell includes a first target cell. For example, if the first network device does not indicate the association relationship between the cells to the terminal device, the candidate target cell includes the first target cell.

For example, assuming that the first-level cell includes cell 1 and cell 2, and the second-level cell includes cell 3, cell 4 and cell 5, there is no apparent association relationship (or a succession relationship) between the first-level cell and the second-level cell, that is, no matter whether the first conditional handover of the terminal device is to cell 1 or cell 2, the second conditional handover of the terminal device may select from cell 3, cell 4 and cell 5. If the terminal device hands over to cell 1, the first target cell includes cell 2. The terminal device may send first information to the first network device to apply for releasing the reserved resources corresponding to cell 2.

In other embodiments, the candidate target cell may include a first target cell and a second target cell. For example, if the first network device indicates the association relationship between the cells to the terminal device, the candidate target cell may include the first target cell and the second target cell.

For example, the first network device may determine two conditional handover chains based on the predicted trajectory of the terminal device. The two conditional handover chains are 1-2-3-4 and 1-5-6-7, respectively. After the first conditional handover of the terminal device is to cell 1, the second conditional handover of the terminal device may be to any one of cell 2 and cell 5. If the terminal device hands over to cell 2, the first target cell includes cell 5. Since cell 6 and cell 7 are associated with cell 5, the second target cell includes cell 6 and cell 7. The terminal device may send first information to the first network device to apply for releasing the reserved resources corresponding to cell 5, cell 6, and cell 7.

### Conditional handover event

In some embodiments, the terminal device may perform cell handover based on a first conditional handover event. The first conditional handover event may be carried in the first configuration information, that is, the first configuration information may include the first conditional handover event to reduce the overhead of signaling. In practical, in some embodiments, the first conditional handover event may also be carried in other messages. For example, the first conditional handover event may be carried in a dedicated message.

In some embodiments, the conditional handover event may also be referred to as a trigger condition or a handover condition.

In some embodiments, the first conditional handover event may be related to location information of the terminal device. For example, the first conditional handover event may include a conditional event D1. In some embodiments, the first conditional handover event may be related to time information of the terminal device (e.g., local time of the terminal device). For example, the first conditional handover event may include a conditional event T1.

In some embodiments, the first conditional handover event may include one or more of conditional event A3, conditional event A4, conditional event A5, conditional event D1 and conditional event T1 described above.

In some embodiments, the first network device may configure a first conditional handover event for each candidate cell. The terminal device may determine, for each candidate cell, whether the candidate cell satisfies the conditional handover event based on the first conditional handover event corresponding to the candidate cell.

In some embodiments, the first network device may configure the same first conditional handover event for multiple candidate cells. In other words, a plurality of candidate cells may share a conditional handover event.

In some embodiments, the reserved resources corresponding to the candidate cell may be configured based on the first conditional handover event. Taking the first conditional handover event including the conditional event T1 as an example, assuming that the conditional handover event corresponding to cell 1 includes conditional event T1, cell 1 reserves resources only within a period of time corresponding to the conditional event T1, and releases the resources when the period of time expires. Taking the first conditional handover event including the conditional event D1 as an example, assuming that the conditional handover event corresponding to cell 2 includes the conditional event D1, cell 2 reserves resources only within a position range corresponding to the conditional event D1, and release the reserved resources after extending the position range.

Since the terminal device is in a mobile state, after it is determined that the terminal device has been away from a cell through the condition event T1 and/or the condition event D1 as time goes by or as the terminal device moves, reserved resources corresponding to the cell can be released to avoid waste of resources.

In some embodiments, the first network device may further instruct a network device corresponding to the candidate cell to cache corresponding reserved resources. For example, the first network device may send third information to a third network device, and the third information instructs the third network device to cache a reserved resource corresponding to the third network device. The third network device may include a network device corresponding to at least one of the plurality of candidate cells, or the third network device may include a network device corresponding to a part or all of the plurality of candidate cells. The candidate cell can cache the corresponding reserved resources according to the instruction of the first network device, to avoid waste of resources since the candidate cell caches the reserved resources too early. The reserved resources may be reserved resources corresponding to the third network device and the terminal device.

In some embodiments, the third information may also be indicated by the core network.

The third network device may be determined based on the predicted trajectory of the terminal device. The first network device may send the third information to the third network device corresponding to the candidate cell when the terminal device is about to handover to the candidate cell.

If the candidate cells are classified by their levels, the third network device may be a network device corresponding to the candidate cells of the same level.

For example, taking FIG. 5 as an example, the handover path of the terminal device is cell 1-cell 2-cell 3-cell 4. When the terminal device hands over to the cell 1, the first network device may instruct cell 2 to cache the corresponding reserved resources. When the terminal device hands over from cell 1 to cell 2, the first network device may instruct cell 3 to cache the corresponding reserved resources. When the terminal device hands over from cell 2 to cell 3, the first network device may instruct cell 4 to cache the corresponding reserved resources.

In some embodiments, the third network device includes a network device corresponding to at least one of the plurality of candidate cells. The number of handover required in the handover from the current cell to the at least one candidate cell of the terminal device is less than or equal to a preset threshold. The preset threshold may be 1, 2, 3, or the like. For example, the at least one candidate cell may include a cell to which the terminal device hands over next time, or the at least one candidate cell may include a cell to which the terminal device can handover when performing a handover. For another example, the at least one candidate cell may include a cell to which the terminal device hands over next time and a cell to which the terminal device hands over the time after next, or the at least one candidate cell may include cells to which the terminal device can handover when performing one handover and two handovers.

In some embodiments, the first network device may send fourth information to the fourth network device, the fourth information indicates a second time window. The second time window is used by the fourth network device to cache reserved resources corresponding to the terminal device within the second time window. The fourth network device may cache reserved resources (such as reserved resources corresponding to the terminal device) in the second time window. By indicating the time window for caching the reserved resources to the fourth network device, the fourth network device can cache the resources within the time window, and the cached resources can be released outside the second time window, thereby avoiding waste of resources.

In some embodiments, different fourth network devices may correspond to different second time windows. For example, the second time window corresponding to network device 1 is earlier than the time window corresponding to network device 2. The network device 1 is a network device corresponding to cell 1, the network device 2 is a network device corresponding to cell 2, and the number of handover required for handover from the current cell to cell 1 of the terminal device is smaller than the number of handover required for handover from the current cell to cell 2 of the terminal device.

In some embodiments, the fourth information may indicate one or more of a starting time of the second time window, an ending time of the second time window, and a duration of the second time window.

The fourth network device may include a network device corresponding to at least one candidate cell of the plurality of candidate cells. For example, the fourth network device may include a network device corresponding to a part of the plurality of candidate cells, or the fourth network device may include a network device corresponding to all of the plurality of candidate cells. In some embodiments, the fourth network device may be the same as the third network device.

### Update of first configuration information

Since the first network device configures the configuration information of a plurality of candidate cells for the terminal device, the first network device may not need to update the first configuration information for a certain period of time. However, in some cases, the first network device needs to update the first configuration information. An update condition of the first configuration information has been studied in the embodiment of the present disclosure, and the update condition will be described below.

In some embodiments, the update of the first configuration information may be triggered by a first condition. The first condition is related to one or more of the following information: a predicted trajectory of the terminal device; a cell handover situation of the terminal device; an access situation of a plurality of candidate cells; or a level of the cell after handover.

In some embodiments, the first condition is related to a predicted trajectory of the terminal device. For example, the first condition may include that the predicted trajectory of the terminal device varies. If the predicted trajectory of the terminal device varies, for example, the terminal device deviates from the original predicted trajectory, it indicates that the candidate cell in the first configuration information may no longer be suitable for the terminal device to perform cell handover, and in this case, the first network device may update the first configuration information. For another example, the first condition may include that the predicted trajectory of the terminal device becomes longer, and if the first network device predicts a longer trajectory of the terminal device, the first network device may update the first configuration information. The update of the configuration information is passively triggered due to a change in the mobile environment.

In some embodiments, the first condition is related to a cell handover situation of the terminal device. For example, the first condition may include that cell handover fails. If cell handover of the terminal device fails, the first network device may update the first configuration information. For another example, the first condition may include that cell handover fails and the reselected cell does not belong to a plurality of candidate cells. After cell handover of the terminal device fails, a cell may be re-selected. If the reselected cell does not belong to a plurality of candidate cells, it means that the original conditional handover chain has been destroyed, and the terminal device may not be able to complete cell handover, and the candidate cell needs to be re-configured. Therefore, in this case, the first network device may update the first configuration information. The update of the configuration information is passively triggered due to a change in the mobile environment.

In some embodiments, the first condition is related to an access situation of the plurality of candidate cells. As one example, the first condition includes that access to the plurality of candidate cells have been all completed. If the terminal device has completed access to the plurality of candidate cells, the first network device may update the first configuration information, so that the terminal device may perform the next cell handover. Taking FIG. 5 as an example, the plurality of candidate cells include cell 1, cell 2, cell 3, and cell 4, and if the terminal device has performed random access to all of cell 1, cell 2, cell 3 and cell 4, the first network device may update the first configuration information. Note that the update of the configuration information is actively triggered after the original configuration information is used.

As another example, the first condition includes that random access to cells at all levels in the plurality of candidate cells have been completed. If the terminal device has performed random access (or cell handover) for all levels of cell, it indicates that the terminal device has completed cell handover at the last level. In this case, the first network device may update the first configuration information, so that the terminal device may perform the next cell handover. For example, assuming that a plurality of candidate cells include a first-level cell and a second-level cell, the first-level cell includes cell 1 and cell 2, and the second-level cell includes cell 3 and cell 4, and if the terminal device hands over from cell 1 to cell 3, it indicates that the terminal device has completed random access for both the first-level cell and the second-level cell, the first network device may update the first configuration information. Note that the update of the configuration information is actively triggered after the original configuration information is used.

In some embodiments, the first condition may be related to the level of the cell after handover. As one example, the first condition may include that the cell after handover belongs to the last level cell. If the cell after handover belongs to the last-level cell, it indicates that the terminal device has completed the handover of the last-level cell. In this case, the first network device may update the first configuration information, so that the terminal device may perform the next cell handover. Note that the update of the configuration information is actively triggered after the original configuration information is used.

As another example, the first condition may include that the cell after handover belongs to a preset-level cell, which may be a level close to the last level. For example, the first condition may include that the cell after handover belongs to the next-to-last-level cell. After the terminal device hands over to the cell in the preset level, it indicates that the terminal device is about to handover to the cell in the last level, and in this case, the first network device may update the first configuration information in advance to avoid interruption of the continuous handover of the terminal device.

After determining that the first configuration information needs to be updated, the first network device may transmit second configuration information to the terminal device. The second configuration information may be understood as updated configuration information. In some embodiments, the second configuration information may be carried in the handover command.

The embodiment of the present disclosure does not specifically limit the form of the second configuration information. As one example, the second configuration information may be a full configuration or a complete configuration, that is, the second configuration information may be used to replace the first configuration information. In other words, the second configuration information may be used by the terminal device to perform continuous handover, or the second configuration information may include all configuration information for the terminal device to perform continuous handover. For example, the terminal device may perform continuous handover using the second configuration information. In some implementations, after receiving the second configuration information, the terminal device may replace the first configuration information with the second configuration information, and directly use the second configuration information to perform cell handover. In this way, the second configuration information can be used directly by the terminal device without processing the second configuration information, thereby reducing the amount of calculation of the terminal device.

As another example, the second configuration information is an incremental configuration, that is, the second configuration information is incremental configuration information for the first configuration information. In some embodiments, at least part of the information in the second configuration information and at least part of the information in the first configuration information are used to generate third configuration information including all configuration information used for the terminal device to perform continuous handover. The third configuration information may also be understood as merged configuration information. For example, after receiving the second configuration information, the terminal device may merge the first configuration information and the second configuration information to obtain the third configuration information. The terminal device may perform subsequent cell handover based on the third configuration information.

In some implementations, the second configuration information includes a candidate cell (or configuration information of the candidate cell) that needs to be updated. The candidate cell that needs to be updated may include a newly added candidate cell and/or a candidate cell that needs to be replaced. In some embodiments, the second configuration information may further include a candidate cell (or configuration information of a candidate cell) that needs to be deleted in the first configuration information. After receiving the second configuration information, the terminal device may merge (or superimpose) the second configuration information and the first configuration information, and perform cell handover based on the merged configuration information. In this case, the terminal device may perform cell handover based on the existing handover command. Since the first network device only configures the incremental configuration information for the terminal device, the air interface resource overhead can be reduced.

Note that, in some embodiments, the first configuration information may be updated by another network device. For example, the first configuration information may be updated by the network device corresponding to the cell after handover. For example, if the terminal device hands over to cell 1, the first configuration information may be updated by the network device corresponding to cell 1.

### Conflict Resolution

For the traditional conditional handover mechanism, after the terminal device completes one cell handover (for example, after the terminal device hands over to the target cell), the network device will re-send the handover command to the terminal device to configure the candidate cell for the next handover for the terminal device. The candidate cells configured in the conventional manner may overlap with the candidate cells in the first configuration information in the embodiment of the present disclosure, which may waste air interface resources. In addition, the traditional conditional handover process may interrupt the flow of continuous conditional handover. For example, after the terminal device completes the traditional conditional handover, since the network device does not know whether the terminal device for accessing through the conditional handover accesses through the traditional conditional handover mechanism or the continuous conditional handover mechanism (that is, the handover mechanism provided by the embodiment of the present disclosure), the continuous conditional handover may be interrupted and the corresponding configuration information may be released.

For example, the first configuration information includes configuration information corresponding to cell 1, cell 2, and cell 3. Assuming that the terminal device hands over to cell 1, and since the network device does not know whether the terminal device hands over to cell 1 using a traditional conditional handover mechanism or a continuous conditional handover mechanism, the network device (such as the network device corresponding to cell 1) may send a handover command to the terminal device to configure a candidate cell. However, the candidate cell configured by the network device may include configuration information corresponding to cell 2 and/or cell 3, which may cause a waste of air interface resources.

Still in the above example, it is assumed that the configuration information sent by the network device to the terminal device also includes configuration information corresponding to cell 1 and cell 2 in the traditional conditional handover mechanism, and if the terminal device hands over to cell 1, the configuration information corresponding to cell 1 and cell 2 will be released. After the configuration information corresponding to cell 2 is released, the continuous conditional handover will be interrupted, and the terminal device may not be able to perform the continuous handover.

In view of the above problems, an embodiment of the present disclosure provides a method for cell handover, in which , a terminal device sends indication information to a network device (such as a first network device) to indicate that the first configuration information (or continuous conditional handover) has been configured, so as to avoid the network device from sending a traditional conditional handover command to the terminal device, and avoid wasting of air interface resources, and avoid interruption of continuous handover.

In some embodiments, if the terminal device successfully hands over to one of the plurality of candidate cells based on the first configuration information, the terminal device may send second information to the second network device, the second information indicates that the terminal device has configured with the first configuration information, or the second information indicates that the terminal device has configured with the continuous conditional handover, or the second information indicates that the second network device does not need to configure the fourth configuration information. The fourth configuration information may be configuration information corresponding to the conventional conditional handover, or the fourth configuration information may be used by the terminal device to perform one-hop handover from the current cell to the cell to be handover next time. The second network device is a network device corresponding to the cell after handover. After receiving the second information sent by the terminal device, the second network device may not send a handover command to the terminal device, so that the traditional conditional handover procedure is not triggered.

### Predicted trajectory

In some embodiments, the plurality of candidate cells in the embodiment of the present disclosure may be all cells on the predicted trajectory of the terminal device, which may enable the terminal device to handover to a suitable cell and thus ensure the communication quality of the terminal device. In some embodiments, the plurality of candidate cells in the embodiment of the present disclosure may be a part of cells on the predicted trajectory of the terminal device. Since the first network device needs to reserve resources for the candidate cells, the part of cells on the predicted trajectory are configured, thereby alleviating the resource reservation pressure on the network side, and reducing the occupation of reserved resources on the resources on the network side.

In some embodiments, the number of the plurality of candidate cells may be a first preset value. The first network device may configure a candidate cell for the terminal device based on the first preset value. Assuming that the first preset value is 5, the first network device may configure five candidate cells for the terminal device. In some embodiments, the maximum value of the number of the plurality of candidate cells may be a second preset value. In other words, the embodiment of the present disclosure may set the maximum number of cells that the first network device can configure. Assuming that the second preset value is 8, the maximum number of candidate cells that the first network device can configure is 8, that is, the number of candidate cells that the first network device can configure for the terminal device is less than or equal to 8.

The embodiment of the present disclosure does not specifically limit the manner of determining the predicted trajectory. An example will be given hereafter.

In some embodiments, the predicted trajectory is related to the geographic location of the terminal device. The geographic location may be a geographic location coordinate. In some implementations, the predicted trajectory may be determined based on the geographic location of the terminal device. The first network device may predict the trajectory of the terminal device based on the geographical location of the terminal device.

In some possible implementations, the geographic location of the terminal device may be a geographic location of the terminal device within a first time window. The geographic location may be a continuous location of the terminal device within the first time window. When the first network device predicts the trajectory of the terminal device, the first network device may determine the geographical location of the terminal device in the first time window, to predict the trajectory of the terminal device. The first time window may be a preset time window. The embodiment of the present disclosure does not specifically limit the starting time, the duration time, and the ending time of the first time window. For example, the starting time of the first time window is the starting time of the trajectory prediction, or the starting time of the first time window may be located after the starting time of the trajectory prediction. As another example, the duration of the first time window may be a first duration, and the first duration may be a preset duration. The first duration may be a predefined duration in the protocol. The first duration may be, for example, 1 minute. As another example, the ending time of the first time window may be located after the starting time of the trajectory prediction. Alternatively, the ending time of the first time window is a time after the starting time of the first time window plus the first duration.

In some possible implementations, the geographic location of the terminal device may also be a geographic location of the terminal device at multiple sampling points. The multiple sampling points are located after a first time moment. The first time moment may be a current time moment, which is the starting time of the trajectory prediction, or a time when prediction occurs. The plurality of sampling points are time sampling points. There is a certain time interval between multiple sampling points. The time intervals between different sampling points may be the same or different. For example, the time intervals between any two adjacent sampling points are the same, i.e. the first network device may periodically sample the terminal device. The sampling period may be a preset period. Taking the sampling period of 4s as an example, the first network device may sample the geographical location of the terminal device every 4s.

In some embodiments, the predicted trajectory is related to a movement speed of the terminal device. In some implementations, the predicted trajectory may be determined based on the movement speed of the terminal device. The first network device may predict the trajectory of the terminal device based on the movement speed of the terminal device.

In some possible implementations, the movement speed of the terminal device may be a movement speed of the terminal device within the first time window. The movement speed may be a continuous speed of the terminal device within the first time window. When the first network device predicts the trajectory of the terminal device, the first network device may determine the movement speed of the terminal device in the first time window, thereby predicting the trajectory of the terminal device. The first time window may be a preset time window. The embodiment of the present disclosure does not specifically limit the starting time, the duration time, and the ending time of the first time window. For example, the starting time of the first time window is the starting time of trajectory prediction, or the starting time of the first time window may be located after the starting time of the trajectory prediction. As another example, the duration of the first time window may be a first duration, and the first duration may be a preset duration. The first duration may be a predefined duration in the protocol. As another example, the ending time of the first time window may be located after the starting time of the trajectory prediction. Alternatively, the ending time of the first time window is a time after the starting time of the first time window plus the first duration.

In some possible implementations, the movement speed of the terminal device may also be the movement speed of the terminal device at multiple sampling points. The multiple sampling points are located after a first time moment. The first time moment may be a current time moment, which is the starting time of the trajectory prediction, or a time when prediction occurs. The plurality of sampling points are time sampling points. There is a certain time interval between multiple sampling points. The time intervals between different sampling points may be the same or different. For example, the time intervals between any two adjacent sampling points are the same, i.e. the first network device may periodically sample the terminal device. The sampling period may be a preset period. Taking the sampling period of 4s as an example, the first network device may sample the movement speed of the terminal device every 4s.

In some embodiments, the predicted trajectory is related to cell information of a cell through which the terminal device travels. The cell information may include ID information of the cell. In some implementations, the predicted trajectory may be determined based on cell information of the cell through which the terminal device passes. The first network device may predict the trajectory of the terminal device based on the cell information of the cell through which the terminal device passes.

In some possible implementations, the cell information of the cell through which the terminal device passes may be cell information of the cell through which the terminal device passes in the first time window. When the first network device performs trajectory prediction on the terminal device, the first network device may determine cell information of the cell that the terminal device passes through in the first time window, to perform trajectory prediction on the terminal device. The first time window may be a preset time window. The embodiment of the present disclosure does not specifically limit the starting time, the duration time, and the ending time of the first time window. For example, the starting time of the first time window is the starting time of trajectory prediction, or the starting time of the first time window may be located after the starting time of the trajectory prediction. As another example, the duration of the first time window may be a first duration, and the first duration may be a preset duration. The first duration may be a predefined duration in the protocol. As another example, the ending time of the first time window may be located after the starting time of the trajectory prediction. Alternatively, the ending time of the first time window is a time after the starting time of the first time window plus the first duration.

In some possible implementations, the cell information of the cell through which the terminal device passes may be cell information of the terminal device at a plurality of sampling points. The plurality of sampling points are located after a first time moment. The first time moment may be a current time moment, which is the starting time of the trajectory prediction, or a time when prediction occurs. The plurality of sampling points are time sampling points. There is a certain time interval between multiple sampling points. The time intervals between different sampling points may be the same or different. For example, the time intervals between any two adjacent sampling points are the same, i.e. the first network device may periodically sample the terminal device. The sampling period may be a preset period. Taking the sampling period of 4s as an example, the first network device may sample the cell information of the cell through which the terminal device passes every 4s.

In some embodiments, the predicted trajectory is related to a signal measurement result measured by the terminal device. The signal measurement result may include one or more of a reference signal receiving power (RSRP), a reference signal receiving quality (RSRQ), and a signal to interference plus noise ratio (SINR). In some implementations, the predicted trajectory may be determined based on the signal measurement result measured by the terminal device. The first network device may predict the trajectory of the terminal device based on the signal measurement result measured by the terminal device.

In some possible implementations, the signal measurement result measured by the terminal device may be a signal measurement result measured by the terminal device within the first time window. When the first network device performs trajectory prediction on the terminal device, the first network device may determine a signal measurement result measured by the terminal device in the first time window, to perform trajectory prediction on the terminal device. The first time window may be a preset time window. The embodiment of the present disclosure does not specifically limit the starting time, the duration time, and the ending time of the first time window. For example, the starting time of the first time window is the starting time of trajectory prediction, or the starting time of the first time window may be located after the starting time of the trajectory prediction. As another example, the duration of the first time window may be a first duration, and the first duration may be a preset duration. The first duration may be a predefined duration in the protocol. As another example, the ending time of the first time window may be located after the starting time of the trajectory prediction. Alternatively, the ending time of the first time window is a time after the starting time of the first time window plus the first duration.

In some possible implementations, the signal measurement result measured by the terminal device may also be a signal measurement result measured by the terminal device at a plurality of sampling points. The plurality of sampling points are located after a first time moment. The first time moment may be a current time moment, which is the starting time of the trajectory prediction or a time when prediction occurs. The plurality of sampling points are time sampling points. There is a certain time interval between multiple sampling points. The time intervals between different sampling points may be the same or different. For example, the time intervals between any two adjacent sampling points are the same, i.e. the first network device may periodically sample the terminal device. The sampling period may be a preset period. Taking the sampling period of 4s as an example, the first network device may sample the signal measurement result measured by the terminal device every 4s, or the terminal device may report the signal measurement result to the first network device every 4s.

In some embodiments, the predicted trajectory may be determined based on any one of the information described above, or may be determined based on the plurality of information described above, which is not specifically limited in the embodiment of the present disclosure. For example, the predicted trajectory may be determined based on the geographical location and the movement speed of the terminal device.

The embodiment of the present disclosure does not specifically limit the way in which the first network device performs trajectory prediction. For example, the first network device may predict the trajectory of the terminal device based on a first model. The first model may be a neural network model. For example, the first model may be an artificial intelligence (AI) model or a machine learning (ML) model. By introducing the AI or ML technology into the mobility scenario, the movement position of the terminal device is predictable, and the network device can determine a cell which the terminal device will pass through in the future based on the predicted trajectory of the terminal device, and can configure a plurality of cells that the terminal device passes through to the terminal device at one time, so as to reduce the amount of data transmitted by the air interface and shorten the handover time.

It should be noted that the "first" in the first-level cell, the "second" in the second-level cell, the "third" in the third-level cell, and the "fourth" in the fourth-level cell in the embodiment of the present disclosure do not represent true levels, but are intended to distinguish different levels.

The method embodiments of the present disclosure are described in detail above with reference to FIGS. 1 to 5, and apparatus embodiments of the present disclosure are described in detail below with reference to FIGS. 6 to 8. It is to be understood that the description of the method embodiments corresponds to the description of the apparatus embodiments, and therefore, regarding portions not described in detail, reference may be made to the preceding method embodiments.

FIG. 6 is a schematic block diagram of a terminal device provided by an embodiment of the present disclosure. The terminal device 600 illustrated in FIG. 6 may be any one of the terminal devices described above. The terminal device 600 may include a receiving unit 610.

The receiving unit 610 is configured to receive first configuration information transmitted by the first network device. The first configuration information includes configuration information corresponding to a plurality of candidate cells, the plurality of candidate cells are determined based on a predicted trajectory of the terminal device, and the plurality of candidate cells are used for continuous handover of the terminal device.

In some possible implementations, the first configuration information is configured based on the levels of the plurality of candidate cells, and the number of handovers in successive handover corresponding to handover to candidate cells in different levels are different.

In some possible implementations, the plurality of candidate cells include a first-level cell and a second-level cell which are in adjacent levels, and a first cell in the first-level cell has an association relationship with a second cell in the second-level cell, and the association relationship indicates that the terminal device can handover to the second cell at a next handover after handover to the first cell.

In some possible implementations, the plurality of candidate cells include a third-level cell and a fourth-level cell which are of adjacent levels, and the terminal device can handover to any one of the fourth-level cell at a next handover after handover to any one of the third-level cell.

In some possible implementations, the terminal device further includes a sending unit 620 configured to send first information to the first network device if the terminal device successfully hands over to one of the plurality of candidate cells based on the first configuration information. The first information is used to apply for releasing a reserved resource corresponding to a candidate target cell, and the candidate target cell is associated with the cell after handover, and the candidate target cell belongs to the plurality of candidate cells.

In some possible implementations, the candidate target cell includes one or more of a first target cell or a second target cell. The first target cell is at the same level as the cell after handover, and the second target cell has an association relationship with the first target cell, and the association relationship indicates that the terminal device can handover to the second target cell at a next handover after handover to the first target cell.

In some possible implementations, the first configuration information includes a first conditional handover event, and the first conditional handover event corresponds to a first candidate cell among the plurality of candidate cells. If the first candidate cell satisfies the first conditional handover event and the first candidate cell is not the cell after handover, the candidate target cell includes the first candidate cell.

In some possible implementations, the first conditional handover event is related to location information of the terminal device and/or time information of the terminal device.

In some possible implementations, the update of the first configuration information is triggered by a first condition, and the first condition is related to one or more of: a predicted trajectory of the terminal device; a cell handover situation of the terminal device; an access situation of the plurality of candidate cells; or a level of the cell after handover.

In some possible implementations, the first condition includes one or more of following conditions: the predicted trajectory has changed; cell handover fails and the reselected cell does not belong to the plurality of candidate cells; access to the plurality of candidate cells have completed; or the cell after handover belongs to the last-level cell.

In some possible implementations, the receiving unit is further configured to: receive second configuration information sent by the first network device. The second configuration information is used for continuous handover by the terminal device, or the second configuration information is incremental configuration information of the first configuration information.

In some possible implementations, if the terminal device successfully hands over to one of the plurality of candidate cells based on the first configuration information, the terminal device further includes a sending unit configured to send second information to a second network device. The second information indicates that the terminal device has been configured with the first configuration information, and the second network device is a network device corresponding to the cell after handover.

In some possible implementations, the plurality of candidate cells are all or a part of cells on the predicted trajectory.

In some possible implementations, the predicted trajectory is related to one or more of the following information: a geographic location of the terminal device; a movement speed of the terminal device; cell information of a cell through which the terminal device will pass; or a signal measurement result measured by the terminal device.

In some possible implementations, the predicted trajectory is determined based on one or more of: a geographical location of the terminal device within a first time window; a movement speed of the terminal device in the first time window; cell information of a cell that the terminal device passes through in the first time window; a signal measurement result measured by the terminal device in the first time window; geographical locations of the terminal device at a plurality of sampling points after a first time instant; movement speeds of the terminal device at a plurality of sampling points after a first time instant; cell information of the terminal device at a plurality of sampling points after a first time instant; or signal measurement results measured by the terminal device at a plurality of sampling points after a first time instant.

In some possible implementations, the starting time of the first time window is the starting time of trajectory prediction, or the starting time of the first time window is located after the starting time of trajectory prediction.

In some possible implementations, the first time moment is the starting time of trajectory prediction, or the first time moment is located after the starting time of trajectory prediction.

FIG. 7 is a schematic block diagram of a network device provided by an embodiment of the present disclosure. The network device 700 illustrated in FIG. 7 may be any of the first network devices described above. The network device 700 may include a sending unit 710.

The sending unit 710 is configured to send first configuration information to the terminal device. The first configuration information includes configuration information corresponding to a plurality of candidate cells, the plurality of candidate cells are determined based on a predicted trajectory of the terminal device, and the plurality of candidate cells are used for continuous handover of the terminal device.

In some possible implementations, the first configuration information is configured based on the levels of the plurality of candidate cells, and the number of handovers in successive handover corresponding to handover to candidate cells in different levels are different.

In some possible implementations, the plurality of candidate cells include a first-level cell and a second-level cell which are in adjacent levels, and a first cell in the first-level cell has an association relationship with a second cell in the second-level cell, and the association relationship indicates that the terminal device can handover to the second cell at a next handover after handover to the first cell.

In some possible implementations, the plurality of candidate cells include a third-level cell and a fourth-level cell which are of adjacent levels, and the terminal device can handover to any one of the fourth-level cell at a next handover after handover to any one of the third-level cell.

In some possible implementations, the network device further includes a receiving unit 720 configured to receive first information sent by the terminal device. The first information is used to apply for releasing a reserved resource corresponding to a candidate target cell, and the candidate target cell is associated with the cell after handover, and the first information is sent by the terminal device when the cell handover is completed.

In some possible implementations, the candidate target cell includes one or more of a first target cell or a second target cell. The first target cell is at the same level as the cell after handover, and the second target cell has an association relationship with the first target cell, and the association relationship indicates that the terminal device can handover to the second target cell at a next handover after handover to the first target cell.

In some possible implementations, the first configuration information includes a first conditional handover event, and the first conditional handover event corresponds to a first candidate cell among the plurality of candidate cells. If the first candidate cell satisfies the first conditional handover event and the first candidate cell is not the cell after handover, the candidate target cell includes the first candidate cell.

In some possible implementations, the first conditional handover event is related to location information of the terminal device and/or time information of the terminal device.

In some possible implementations, the update of the first configuration information is triggered by a first condition, and the first condition is related to one or more of: a predicted trajectory of the terminal device; a cell handover situation of the terminal device; an access situation of the plurality of candidate cells; or a level of the cell after handover.

In some possible implementations, the first condition includes one or more of following conditions: the predicted trajectory has changed; cell handover fails and the reselected cell does not belong to the plurality of candidate cells; access to the plurality of candidate cells have completed; or the cell after handover belongs to the last-level cell.

In some possible implementations, the sending unit is further configured to send second configuration information to the terminal device. The second configuration information is used for continuous handover by the terminal device, or the second configuration information is incremental configuration information of the first configuration information.

In some possible implementations, the plurality of candidate cells are all or a part of cells on the predicted trajectory.

In some possible implementations, the predicted trajectory is related to one or more of the following information: a geographic location of the terminal device; a movement speed of the terminal device; cell information of a cell through which the terminal device will pass; or a signal measurement result measured by the terminal device.

In some possible implementations, the predicted trajectory is determined based on one or more of: a geographical location of the terminal device within a first time window; a movement speed of the terminal device in the first time window; cell information of a cell that the terminal device passes through in the first time window; a signal measurement result measured by the terminal device in the first time window; geographical locations of the terminal device at a plurality of sampling points after a first time moment; movement speeds of the terminal device at a plurality of sampling points after a first time moment; cell information of the terminal device at a plurality of sampling points after a first time moment; or signal measurement results measured by the terminal device at a plurality of sampling points after a first time moment.

In some possible implementations, the starting time of the first time window is the starting time of trajectory prediction, or the starting time of the first time window is located after the starting time of trajectory prediction.

In some possible implementations, the first time moment is the starting time of trajectory prediction, or the first time moment is located after the starting time of trajectory prediction.

In some possible implementations, the sending unit is further configured to send third information to a third network device. The third information is used to instruct the third network device to cache a reserved resource corresponding to the terminal device, the third network device includes a network device corresponding to at least one candidate cell among the plurality of candidate cells, and the number of handover required for handover from the current cell to the at least one candidate cell of the terminal device is less than or equal to a preset threshold.

In some possible implementations, the sending unit is further configured to send fourth information to a fourth network device. The fourth information indicates a second time window, the second time window is used by the fourth network device to cache a reserved resource corresponding to the terminal device in the second time window, and the fourth network device includes a network device corresponding to at least one candidate cell among the plurality of candidate cells.

FIG. 8 is a schematic structural diagram of a communication device according to an embodiment of the present disclosure. The dashed line in FIG. 8 indicates that the unit or module is optional. The device 800 may be used to implement the methods described in the method embodiments described above. The device 800 may be a chip, a terminal device, or a network device.

The device 800 may include one or more processors 810. The processor 810 may support the device 800 to implement the methods described in the previous method embodiments. The processor 810 may be a general-purpose processor or a special purpose processor. For example, the processor may be a central processing unit (CPU). Alternatively, the processor may be other general-purpose processors, digital signal processors (DSP), application specific integrated circuits (ASICs), field programmable gate arrays (FPGAs) or other programmable logic devices, discrete gate or transistor logic devices, discrete hardware components, and the like. The general-purpose processor may be a microprocessor or the processor may be any conventional processor or the like.

The device 800 may further include one or more memories 820 having a program stored thereon which, when executed by the processor 810, causes the processor 810 to execute the methods described in the previous method embodiments. The memory 820 may be independent of the processor 810 or may be integrated in the processor 810.

The device 800 may further include a transceiver 830. The processor 810 may communicate with other devices or chips through the transceiver 830. For example, the processor 810 may transmit and receive data with other devices or chips through the transceiver 830.

The embodiments of the present disclosure further provide a computer-readable storage medium for storing a program. The computer-readable storage medium can be applied to a terminal or a network device provided by the embodiments of the present disclosure, and the program causes a computer to execute methods executed by the terminal or the network device in various embodiments of the present disclosure.

The embodiments of the present disclosure further provide a computer program product. The computer program product includes a program. The computer program product can be applied to a terminal or a network device provided by the embodiments of the present disclosure, and the program causes a computer to execute methods executed by the terminal or the network device in various embodiments of the present disclosure.

The embodiments of the present disclosure further provide a computer program. The computer program can be applied to a terminal or a network device provided by the embodiments of the present disclosure, and the computer program causes a computer to execute methods executed by the terminal or the network device in various embodiments of the present disclosure.

It is to be understood that the terms "system" and "network" may be used interchangeably in the present disclosure. In addition, the terminology used in the present disclosure is only used to explain specific embodiments of the present disclosure, and is not intended to limit the present disclosure. The terms "first", "second", "third", "fourth" and the like in the specification and claims of the present disclosure and the accompanying drawings are used to distinguish different objects and are not used to describe a particular order. Furthermore, the terms "including" and "having" and any variations thereof are intended to cover a non-exclusive inclusion.

In the embodiments of the present disclosure, the "indication" may be a direct indication, an indirect indication, or an association relationship. By way of example, A indicates B, which may mean that A directly indicates B, for example, B may be acquired by A; may also mean that A indirectly indicates B, for example, A indicates C, and B can be acquired by C; and may also mean that there is an association relationship between A and B.

In the embodiments of the present disclosure, the term "including" may refer to direct inclusion or indirect inclusion. Alternatively, the "including" in the embodiments of the present disclosure may be replaced with "indicating" or "for determining". For example, A including B, which may be replaced by A indicating B, or A is used to determine B.

In the embodiments of the present disclosure, "B corresponding to A" means that B is associated with A, and B can be determined from A. However, it should also be understood that determining B from A does not mean determining B from A alone, but B may also be determined from A and/or other information.

In the embodiments of the present disclosure, the term "correspondence" may mean that there is a direct correspondence or an indirect correspondence between the two objects, or may mean that there is a correlation between the two objects, or may be a relationship between indicating and being instructed, configuring and being configured, or the like.

In the embodiment of the present disclosure, "pre-definition" or "pre-configuration" can be implemented by pre-storing corresponding codes, tables, or other ways that can be used to indicate relevant information in a device (for example, including a terminal device and a network device), and the specific implementation method of the pre-definition and pre-configuration is not limited in the present disclosure. For example, pre-definition may refer to definition in a protocol.

In the embodiment of the present disclosure, the "protocol" may refer to a standard protocol in the communication field, and may include, for example, an LTE protocol, an NR protocol, and related protocols applied to future communication systems, and the present disclosure is not limited thereto.

The term "and/or" in the embodiment of the present disclosure is merely an association relationship describing the associated object, indicating that there may be three relationships, for example, A and/or B, which may mean that A exists alone, A and B exist at the same time, and B exists alone. In addition, the character "/" herein generally indicates that the associated objects before and after are in an "or" relationship.

In various embodiments of the present disclosure, the sequence numbers of the above-described processes do not mean the order of execution, and the execution order of each process should be determined by its function and internal logic, and should not constitute any limitation on the implementation process of the embodiments of the present disclosure.

In the several embodiments provided herein, it should be understood that the disclosed systems, devices, and methods may be implemented in other ways. For example, the device embodiments described above are merely illustrative. For example, the division of units is merely a logical function division, and there may be other division manners in actual implementation. For example, multiple units or components may be combined or integrated into another system, or some features may be ignored or not implemented. Alternatively, the coupling or direct coupling or communication connection shown or discussed may be an indirect coupling or a communication connection through some interface, devices or units, and may be in electrical, mechanical or other form.

The units described as separate components may or may not be physically separated, and the components shown as units may or may not be physical units, that is, the components may be located in one place, or may be distributed over multiple network units. Some or all of the units may be selected according to actual needs to achieve the purpose of the solution of the present embodiment.

In addition, the functional units in each embodiment of the present disclosure may be integrated into one processing unit, each unit may physically exist alone, or two or more units may be integrated in one unit.

The above-described embodiments may be implemented in whole or in part by software, hardware, firmware, or any combination thereof. When implemented using software, the embodiments may be implemented in whole or in part in the form of a computer program product. The computer program product includes one or more computer instructions. When the computer program instructions are loaded and executed on a computer, processes or functions described according to embodiments of the present disclosure are generated in whole or in part. The computer may be a general-purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via a wired (e.g., a coaxial cable, fiber optic, digital subscriber line (DSL)) or wireless (e.g., infrared, wireless, microwave, etc.) manner. The computer-readable storage medium may be any available medium that can be read by a computer or a data storage device such as a server, a data center, or the like that includes one or more available media integrations. The available medium may be a magnetic medium (e.g., a floppy disk, a hard disk, a magnetic tape), an optical medium (e.g., a digital video disc (DVD)), or a semiconductor medium (e.g., a solid-state disk (SSD)), or the like.

The foregoing are only specific embodiments of the present disclosure, but the protection scope of the present disclosure is not limited thereto, and the changes or substitutions easily conceived by the person in the art within the technical scope disclosed in the present disclosure fall within the scope of protection of the present disclosure. Therefore, the scope of protection of the present disclosure should conform with the scope of protection of the claims.

## Claims

1. A method for cell handover, comprising:
receiving, by a terminal device, first configuration information sent by a first network device, wherein the first configuration information comprises configuration information corresponding to a plurality of candidate cells, the plurality of candidate cells are determined based on a predicted trajectory of the terminal device, and the plurality of candidate cells are used for successive handover by the terminal device.

2. The method according to claim 1, wherein the first configuration information is configured based on levels of the plurality of candidate cells, and the number of handover in successive handover corresponding to handover to the candidate cells of different levels are different.

3. The method according to claim 2, wherein the plurality of candidate cells comprise a first-level cell and a second-level cell which are of adjacent levels, a first cell in the first-level cell has an association relationship with a second cell in the second-level cell, and the association relationship indicates that the terminal device is able to handover to the second cell at a next handover after handover to the first cell.

4. The method according to claim 2, wherein the plurality of candidate cells comprise a third-level cell and a fourth-level cell which are of adjacent levels, and the terminal device is able to handover to any one of the fourth-level cell at a next handover after handover to any one of the third-level cell.

5. The method according to any one of claims 2 to 4, further comprising:
sending, by the terminal device, first information to the first network device in response to the terminal device successfully handing over to one of the plurality of candidate cells based on the first configuration information, wherein the first information is used to apply for releasing reserved resources corresponding to a candidate target cell, the candidate target cell is associated with the cell after handover, and the candidate target cell belongs to the plurality of candidate cells.

6. The method according to claim 5, wherein the candidate target cell comprises one or more of:
a first target cell, wherein the first target cell is a cell in a same level as the cell after handover; or
a second target cell having an association relationship with the first target cell, wherein the association relationship indicates that the terminal device is able to handover to the second target cell at a next handover after the terminal device hands over to the first target cell.

7. The method according to claim 5 or 6, wherein the first configuration information comprises a first conditional handover event, the first conditional handover event corresponds to a first candidate cell among the plurality of candidate cells, and the candidate target cell comprises the first candidate cell if the first candidate cell satisfies the first conditional handover event and the first candidate cell is not the cell after handover.

8. The method according to claim 7, wherein the first conditional handover event is related to location information of the terminal device and/or time information of the terminal device.

9. The method according to any one of claims 1 to 8, wherein update of the first configuration information is triggered by a first condition, and the first condition is related to one or more of:
the predicted trajectory of the terminal device;
a cell handover situation of the terminal device;
an access situation of the plurality of candidate cells; or
a level of the cell after handover.

10. The method according to claim 9, wherein the first condition comprises one or more of following conditions:
the predicted trajectory changes;
cell handover fails and a reselected cell does not belong to the plurality of candidate cells;
the plurality of candidate cells have been completed accessed; or
the cell after handover belongs to a cell of a last level.

11. The method according to claim 9 or 10, further comprising: if the first configuration information is to be updated:
receiving, by the terminal device, second configuration information sent by the first network device,
wherein the second configuration information comprises all configuration information used for successive handover of the terminal device, or at least part of information in the first configuration information and at least part of information in the second configuration information are used to generate third configuration information, and the third configuration information comprises all configuration information used for successive handover of the terminal device.

12. The method according to any one of claims 1 to 11, further comprising: in response to the terminal device successfully handing over to one of the plurality of candidate cells based on the first configuration information,
sending, by the terminal device, second information to a second network device, wherein the second information indicates that there is no need for the second network device to configure fourth configuration information, the fourth configuration information is used by the terminal device to perform one-hop handover from a current cell to a cell to be handover next time, and the second network device is a network device corresponding to the cell after the handover.

13. The method according to any one of claims 1 to 12, wherein the plurality of candidate cells are all or a part of cells on the predicted trajectory.

14. The method according to claim 13, wherein the predicted trajectory is related to one or more of:
a geographical location of the terminal device;
a movement speed of the terminal device;
cell information of a cell through which the terminal device is to pass; or
a signal measurement result measured by the terminal device.

15. The method according to claim 14, wherein the predicted trajectory is determined based on one or more of:
a geographical location of the terminal device within a first time window;
a movement speed of the terminal device in the first time window;
cell information of a cell through which the terminal device passes in the first time window;
a signal measurement result measured by the terminal device in the first time window;
geographical locations of the terminal device at a plurality of sampling points after a first time moment;
movement speeds of the terminal device at the plurality of sampling points after the first time moment;
cell information of the terminal device at the plurality of sampling points after the first time moment; or
signal measurement results measured by the terminal device at the plurality of sampling points after the first time moment.

16. The method according to claim 15, wherein a starting time of the first time window is a starting time of trajectory prediction, or is located after the starting time of trajectory prediction.

17. The method according to claim 15 or 16, wherein the first time moment is a starting time of trajectory prediction, or is located after the starting time of trajectory prediction.

18. A method for cell handover, comprising:
sending, by a first network device, first configuration information to a terminal device, wherein the first configuration information comprises configuration information corresponding to a plurality of candidate cells, the plurality of candidate cells are determined based on a predicted trajectory of the terminal device, and the plurality of candidate cells are used for successive handover by the terminal device.

19. The method according to claim 18, wherein the first configuration information is configured based on levels of the plurality of candidate cells, and the number of handover in successive handover corresponding to handover to the candidate cells of different levels are different.

20. The method according to claim 19, wherein the plurality of candidate cells comprise a first-level cell and a second-level cell which are of adjacent levels, a first cell in the first-level cell has an association relationship with a second cell in the second-level cell, and the association relationship indicates that the terminal device is able to handover to the second cell at a next handover after handover to the first cell.

21. The method according to claim 19, wherein the plurality of candidate cells comprise a third-level cell and a fourth-level cell which are of adjacent levels, and the terminal device is able to handover to any one of the fourth-level cell at a next handover after handover to any one of the third-level cell.

22. The method according to any one of claims 19 to 21, further comprising:
receiving, by the first network device, first information sent by the terminal device, wherein the first information is used for applying for releasing a reserved resource corresponding to a candidate target cell, the candidate target cell is associated with the cell after handover, and the candidate target cell belongs to the plurality of candidate cells, the first information is sent in response to the terminal device successfully handing over to one of the plurality of candidate cells based on the first configuration information.

23. The method according to claim 22, wherein the candidate target cell comprises one or more of:
a first target cell, wherein the first target cell is a cell in a same level as the cell after handover; or
a second target cell having an association relationship with the first target cell, wherein the association relationship indicates that the terminal device is able to handover to the second target cell at a next handover after the terminal device hands over to the first target cell.

24. The method according to claim 22 or 23, wherein the first configuration information comprises a first conditional handover event, the first conditional handover event corresponds to a first candidate cell among the plurality of candidate cells, and the candidate target cell comprises the first candidate cell if the first candidate cell satisfies the first conditional handover event and the first candidate cell is not the cell after handover.

25. The method according to claim 24, wherein the first conditional handover event is related to location information of the terminal device and/or time information of the terminal device.

26. The method according to any one of claims 18 to 25, wherein update of the first configuration information is triggered by a first condition, and the first condition is related to one or more of:
the predicted trajectory of the terminal device;
a cell handover situation of the terminal device;
an access situation of the plurality of candidate cells; or
a level of the cell after handover.

27. The method according to claim 26, wherein the first condition comprises one or more of following conditions:
the predicted trajectory changes;
cell handover fails and a reselected cell does not belong to the plurality of candidate cells;
the plurality of candidate cells have been completed accessed; or
the cell after handover belongs to a cell of a last level.

28. The method according to claim 26 or 27, further comprising: if the first configuration information is to be updated:
sending, by the first network device, second configuration information to the terminal device,
wherein the second configuration information comprises all configuration information used for successive handover of the terminal device, or at least part of information in the first configuration information and at least part of information in the second configuration information are used to generate third configuration information, and the third configuration information comprises all configuration information used for successive handover of the terminal device.

29. The method according to any one of claims 18 to 28, wherein the plurality of candidate cells are all or a part of cells on the predicted trajectory.

30. The method according to claim 29, wherein the predicted trajectory is related to one or more of:
a geographical location of the terminal device;
a movement speed of the terminal device;
cell information of a cell through which the terminal device is to pass; or
a signal measurement result measured by the terminal device.

31. The method according to claim 30, wherein the predicted trajectory is determined based on one or more of:
a geographical location of the terminal device within a first time window;
a movement speed of the terminal device in the first time window;
cell information of a cell through which the terminal device passes in the first time window;
a signal measurement result measured by the terminal device in the first time window;
geographical locations of the terminal device at a plurality of sampling points after a first time moment;
movement speeds of the terminal device at the plurality of sampling points after the first time moment;
cell information of the terminal device at the plurality of sampling points after the first time moment; or
signal measurement results measured by the terminal device at the plurality of sampling points after the first time moment.

32. The method according to claim 31, wherein a starting time of the first time window is a starting time of trajectory prediction, or is located after the starting time of trajectory prediction.

33. The method according to claim 31 or 32, wherein the first time moment is a starting time of trajectory prediction, or is located after the starting time of trajectory prediction.

34. The method according to any one of claims 18 to 33, further comprising:
sending, by the first network device, third information to a third network device, wherein the third information instructs the third network device to cache a reserved resource corresponding to the terminal device, the third network device comprises a network device corresponding to at least one candidate cell among the plurality of candidate cells, and the number of handover required for handover from a current cell to the at least one candidate cell of the terminal device is less than or equal to a preset threshold.

35. The method according to any one of claims 18 to 34, further comprising:
sending, by the first network device, fourth information to a fourth network device, wherein the fourth information indicates a second time window, the second time window is used by the fourth network device to cache a reserved resource corresponding to the terminal device within the second time window, and the fourth network device comprises a network device corresponding to at least one candidate cell among the plurality of candidate cells.

36. A terminal device comprising:
a receiving unit configured to receive first configuration information sent by a first network device, wherein the first configuration information comprises configuration information corresponding to a plurality of candidate cells, the plurality of candidate cells are determined based on a predicted trajectory of the terminal device, and the plurality of candidate cells are used for successive handover by the terminal device.

37. The terminal device according to claim 36, wherein the first configuration information is configured based on levels of the plurality of candidate cells, and the number of handover in successive handover corresponding to handover to the candidate cells of different levels are different.

38. The terminal device according to claim 37, wherein the plurality of candidate cells comprise a first-level cell and a second-level cell which are of adjacent levels, a first cell in the first-level cell has an association relationship with a second cell in the second-level cell, and the association relationship indicates that the terminal device is able to handover to the second cell at a next handover after handover to the first cell.

39. The terminal device according to claim 37, wherein the plurality of candidate cells comprise a third-level cell and a fourth-level cell which are of adjacent levels, and the terminal device is able to handover to any one of the fourth-level cell at a next handover after handover to any one of the third-level cell.

40. The terminal device according to any one of claims 37 to 39, further comprising a sending unit configured to:
send first information to the first network device in response to the terminal device successfully handing over to one of the plurality of candidate cells based on the first configuration information, wherein the first information is used to apply for releasing reserved resources corresponding to a candidate target cell, the candidate target cell is associated with the cell after handover, and the candidate target cell belongs to the plurality of candidate cells.

41. The terminal device according to claim 40, wherein the candidate target cell comprises one or more of:
a first target cell, wherein the first target cell is a cell in a same level as the cell after handover; or
a second target cell having an association relationship with the first target cell, wherein the association relationship indicates that the terminal device is able to handover to the second target cell at a next handover after the terminal device hands over to the first target cell.

42. The terminal device according to claim 40 or 41, wherein the first configuration information comprises a first conditional handover event, the first conditional handover event corresponds to a first candidate cell among the plurality of candidate cells, and the candidate target cell comprises the first candidate cell if the first candidate cell satisfies the first conditional handover event and the first candidate cell is not the cell after handover.

43. The terminal device according to claim 42, wherein the first conditional handover event is related to location information of the terminal device and/or time information of the terminal device.

44. The terminal device according to any one of claims 36 to 43, wherein update of the first configuration information is triggered by a first condition, and the first condition is related to one or more of:
the predicted trajectory of the terminal device;
a cell handover situation of the terminal device;
an access situation of the plurality of candidate cells; or
a level of the cell after handover.

45. The terminal device according to claim 44, wherein the first condition includes one or more of following conditions:
the predicted trajectory changes;
cell handover fails and a reselected cell does not belong to the plurality of candidate cells;
the plurality of candidate cells have been completed accessed; or
the cell after handover belongs to a cell of a last level.

46. The terminal device according to any one of claims 36 to 45, wherein if the first configuration information is to be updated, the receiving unit is further configured to:
receive second configuration information sent by the first network device,
wherein the second configuration information comprises all configuration information used for successive handover of the terminal device, or at least part of information in the first configuration information and at least part of information in the second configuration information are used to generate third configuration information, and the third configuration information comprises all configuration information used for successive handover of the terminal device

47. The terminal device according to any one of claims 36 to 46, further comprising, in response to the terminal device successfully handing over to one of the plurality of candidate cells based on the first configuration information,
a sending unit configured to send second information to a second network device, wherein the second information indicates that there is no need for the second network device to configure fourth configuration information, the fourth configuration information is used by the terminal device to perform one-hop handover from a current cell to a cell to be handover next time, and the second network device is a network device corresponding to the cell after the handover.

48. The terminal device according to any one of claims 36 to 47, wherein the plurality of candidate cells are all or a part of cells on the predicted trajectory.

49. The terminal device according to claim 48, wherein the predicted trajectory is related to one or more of:
a geographical location of the terminal device;
a movement speed of the terminal device;
cell information of a cell through which the terminal device is to pass; or
a signal measurement result measured by the terminal device.

50. The terminal device according to claim 49, wherein the predicted trajectory is determined based on one or more of:
a geographical location of the terminal device within a first time window;
a movement speed of the terminal device in the first time window;
cell information of a cell through which the terminal device passes in the first time window;
a signal measurement result measured by the terminal device in the first time window;
geographical locations of the terminal device at a plurality of sampling points after a first time moment;
movement speeds of the terminal device at the plurality of sampling points after the first time moment;
cell information of the terminal device at the plurality of sampling points after the first time moment; or
signal measurement results measured by the terminal device at the plurality of sampling points after the first time moment.

51. The terminal device according to claim 50, wherein a starting time of the first time window is a starting time of trajectory prediction, or is located after the starting time of trajectory prediction.

52. The terminal device according to claim 50 or 51, wherein the first time moment is a starting time of trajectory prediction, or is located after the starting time of trajectory prediction.

53. A network device, wherein the network device is a first network device, and comprises:
a sending unit configured to send first configuration information to a terminal device, wherein the first configuration information comprises configuration information corresponding to a plurality of candidate cells, the plurality of candidate cells are determined based on a predicted trajectory of the terminal device, and the plurality of candidate cells are used for successive handover by the terminal device.

54. The network device according to claim 53, wherein the first configuration information is configured based on levels of the plurality of candidate cells, and the number of handover in successive handover corresponding to handover to the candidate cells of different levels are different.

55. The network device according to claim 54, wherein the plurality of candidate cells comprise a first-level cell and a second-level cell which are of adjacent levels, a first cell in the first-level cell has an association relationship with a second cell in the second-level cell, and the association relationship indicates that the terminal device is able to handover to the second cell at a next handover after handover to the first cell.

56. The network device according to claim 54, wherein the plurality of candidate cells comprise a third-level cell and a fourth-level cell which are of adjacent levels, and the terminal device is able to handover to any one of the fourth-level cell at a next handover after handover to any one of the third-level cell.

57. The network device according to any one of claims 54 to 56, further comprising:
a receiving unit configured to receive first information sent by the terminal device, wherein the first information is used for applying for releasing a reserved resource corresponding to a candidate target cell, the candidate target cell is associated with the cell after handover, and the candidate target cell belongs to the plurality of candidate cells, the first information is sent in response to the terminal device successfully handing over to one of the plurality of candidate cells based on the first configuration information.

58. The network device of claim 57, wherein the candidate target cell comprises one or more of:
a first target cell, wherein the first target cell is a cell in a same level as the cell after handover; or
a second target cell having an association relationship with the first target cell, wherein the association relationship indicates that the terminal device is able to handover to the second target cell at a next handover after the terminal device hands over to the first target cell.

59. The network device according to claim 57 or 58, wherein the first configuration information comprises a first conditional handover event, the first conditional handover event corresponds to a first candidate cell among the plurality of candidate cells, and the candidate target cell comprises the first candidate cell if the first candidate cell satisfies the first conditional handover event and the first candidate cell is not the cell after handover.

60. The network device according to claim 59, wherein the first conditional handover event is related to location information of the terminal device and/or time information of the terminal device.

61. The network device according to any one of claims 53 to 60, wherein update of the first configuration information is triggered by a first condition, and the first condition is related to one or more of:
the predicted trajectory of the terminal device;
a cell handover situation of the terminal device;
an access situation of the plurality of candidate cells; or
a level of the cell after handover.

62. The network device according to claim 61, wherein the first condition comprises one or more of following conditions:
the predicted trajectory changes;
cell handover fails and a reselected cell does not belong to the plurality of candidate cells;
the plurality of candidate cells have been completed accessed; or
the cell after handover belongs to a cell of a last level.

63. The network device according to any one of claims 53 to 62, wherein if the first configuration information is to be updated, the sending unit is further configured to:
send second configuration information to the terminal device;
wherein the second configuration information comprises all configuration information used for successive handover of the terminal device, or at least part of information in the first configuration information and at least part of information in the second configuration information are used to generate third configuration information, and the third configuration information comprises all configuration information used for successive handover of the terminal device.

64. The network device according to any one of claims 53 to 63, wherein the plurality of candidate cells are all or a part of cells on the predicted trajectory.

65. The network device of claim 64, wherein the predicted trajectory is related to one or more of:
a geographical location of the terminal device;
a movement speed of the terminal device;
cell information of a cell through which the terminal device is to pass; or
a signal measurement result measured by the terminal device.

66. The network device according to claim 65, wherein the predicted trajectory is determined based on one or more of:
a geographical location of the terminal device within a first time window;
a movement speed of the terminal device in the first time window;
cell information of a cell through which the terminal device passes in the first time window;
a signal measurement result measured by the terminal device in the first time window;
geographical locations of the terminal device at a plurality of sampling points after a first time moment;
movement speeds of the terminal device at the plurality of sampling points after the first time moment;
cell information of the terminal device at the plurality of sampling points after the first time moment; or
signal measurement results measured by the terminal device at the plurality of sampling points after the first time moment.

67. The network device according to claim 66, wherein a starting time of the first time window is a starting time of trajectory prediction, or is located after the starting time of trajectory prediction.

68. The network device according to claim 66 or 67, wherein the first time moment is a starting time of trajectory prediction, or is located after the starting time of trajectory prediction.

69. The network device according to any one of claims 53 to 68, wherein the sending unit is further configured to:
send third information to a third network device, wherein the third information instructs the third network device to cache a reserved resource corresponding to the terminal device, the third network device comprises a network device corresponding to at least one candidate cell among the plurality of candidate cells, and the number of handover required for handover from a current cell to the at least one candidate cell of the terminal device is less than or equal to a preset threshold.

70. The network device according to any one of claims 53 to 69, wherein the sending unit is further configured to:
send fourth information to a fourth network device, wherein the fourth information indicates a second time window, the second time window is used by the fourth network device to cache a reserved resource corresponding to the terminal device within the second time window, and the fourth network device comprises a network device corresponding to at least one candidate cell among the plurality of candidate cells.

71. A terminal device comprising a memory having a program stored thereon, a processor and a communication interface, wherein the processor is configured for invoking the program in the memory to cause the terminal device to perform the method according to any one of claims 1 to 17.

72. A network device comprising a memory having a program stored thereon, a processor and a communication interface, wherein the processor is configured for invoking the program in the memory to cause the network device to perform the method according to any one of claims 18 to 35.

73. A device comprising a processor for invoking a program from a memory to perform the method according to any one of claims 1 to 17.

74. A device comprising a processor for invoking a program from a memory to perform the method according to any one of claims 18 to 35.

75. A chip comprising a processor for invoking a program from a memory to cause a device on which the chip is mounted to perform the method according to any one of claims 1 to 17.

76. A chip comprising a processor for invoking a program from a memory to cause a device on which the chip is mounted to perform the method according to any one of claims 18 to 35.

77. A computer-readable storage medium having stored thereon a program that causes a computer to perform the method according to any one of claims 1 to 17.

78. A computer-readable storage medium having stored thereon a program that causes a computer to perform the method according to any one of claims 18 to 35.

79. A computer program product comprising a program that causes a computer to perform the method according to any one of claims 1 to 17.

80. A computer program product comprising a program that causes a computer to perform the method according to any one of claims 18 to 35.

81. A computer program which causes a computer to perform the method according to any one of claims 1 to 17.

82. A computer program which causes a computer to perform the method according to any one of claims 18 to 35.
